# FASCICULE DE BREVET EUROPEEN

(11) **EP 2 675 735 B1**
(45) Date de publication et mention de la délivrance du brevet: **16.11.2016**
(21) Numéro de dépôt: 12705352.8
(22) Date de dépôt: 20.01.2012
(51) Int. Cl.: B65G 47/08, B65G 47/90, B65G 47/91

(54) **OUTIL DE MANIPULATION ET DE REGROUPEMENT DE PRODUITS ET PROCEDE DE REGLAGE DUDIT OUTIL**
WERKZEUG ZUR HANDHABUNG UND GRUPPIERUNG VON PRODUKTEN UND VERFAHREN ZUR EINSTELLUNG DIESES WERKZEUGS
TOOL FOR HANDLING AND GROUPING TOGETHER PRODUCTS AND METHOD FOR ADJUSTING SAID TOOL

(30) Priorité: 15.02.2011 FR 1151219
(43) Date de publication de la demande: 25.12.2013
(73) Titulaire: C.E.R.M.E.X. CONSTRUCTIONS ETUDES ET RECHERCHES DE MATERIELS POUR L'EMBALLAGE D'EXPEDITION, 21910 Corcelles-Les-Cîteaux (FR)
(72) Inventeur: BEGIN, Michel, F-76930 Octeville S/mer (FR); DEVAUX, Eric, F-76930 Octeville S/mer (FR); DAMIEN, Sébastien, F-76930 Octeville S/mer (FR)
(74) Mandataire: Eltzer, Thomas
(86) Numéro de dépôt international: PCT/FR2012/050135
(87) Numéro de publication internationale: WO 2012/110724

(56) Documents cités:
- EP-A1- 0 647 579
- EP-A1- 2 048 098
- JP-A- 11 245 186
- US-A- 4 199 050
- US-A- 5 177 434

## Description

L'invention se rapporte à un outil de manipulation et de regroupement de produits en vue de leur conditionnement en lots.

L'outil conforme à l'invention est conçu pour être mis en oeuvre dans une installation de convoyage où les produits sont déplacés d'un poste à un autre sur un convoyeur en étant alignés les uns derrière les autres et en étant séparés les uns des autres d'une distance prédéterminée.

On connait des installations équipées de modules permettant de regrouper des produits qui reposent par leur fond sur le convoyeur. Par exemple, le document FR 2 918 359 décrit un outil de regroupement de flacons, bouteilles ou autres, l'outil étant réalisé sous la forme d'un peigne présentant des dents. Les produits s'insèrent chacun entre deux dents du peigne qui est monté mobile en déplacement. Quand le peigne est plein, il déplace le lot de produits disposés entre ses dents jusqu'à un emplacement donné où le lot est libéré.

Un tel outil de regroupement impose une distance minimum prédéterminée entre les produits quand ils sont convoyés, la distance minimum prédéterminée étant légèrement supérieure à l'épaisseur des dents qui s'insèrent entre deux produits consécutifs. Par ailleurs, les espaces entre les dents doivent correspondre aux dimensions des produits qui doivent s'insérer entre les dents du peigne. Aussi, si un industriel souhaite changer les dimensions des produits à regrouper, il est nécessaire qu'il change le peigne.

Une telle solution technique n'est donc pas adaptable très facilement aux changements de forme des produits, ces changements de forme (design) étant toutefois nécessaires pour toujours attirer le consommateur et/ou permettre une utilisation ou un rangement/stockage particulier des produits.

On connait, par ailleurs, un outil de robot manipulateur tel que décrit dans le document FR 2 876 615. Un tel outil de robot permet de saisir des lots entiers de produits (en l'occurrence des bouteilles) disposés alignés les uns derrière les autres, et comprenant plusieurs rangées de produits. Chaque rangée comprend un certain nombre de produits qui sont espacés les uns des autres d'une même distance qui est fixe. Une première rangée de produits peut être remplacée par une autre rangée comprenant plus ou moins de produits. Pour ce faire, l'outil comprend des moyens de fixation rapide de la rangée sur le châssis de l'outil.

Un tel outil présente toutefois le même inconvénient que celui décrit dans le document FR 2 918 359 : l'espace entre les éléments de préhension n'est pas modifiable, ce qui implique de changer la rangée d'éléments de préhension quand les produits changent de forme ou quand leur espacement sur le tapis de convoyage est changé.

On connait par ailleurs, du document FR 2 879 179, un dispositif de transfert de produits (convoyeur) qui comporte une rangée d'éléments de préhension permettant le convoyage des produits alignés les uns derrière les autres.

Le dispositif comprend un système de parallélogramme, reliant deux éléments adjacents, de sorte que les éléments de préhension peuvent s'éloigner ou se rapprocher les uns des autres entre une distance minimum et une distance maximum. De cette façon, les produits peuvent être séparés par un premier écartement dans un premier poste de traitement et être séparés par un second écartement dans un second poste de traitement.

Un tel dispositif présente plusieurs inconvénients. Tout d'abord, il ne permet pas de fixer un écartement intermédiaire entre l'écartement minimum et l'écartement maximum autorisé par le parallélogramme. De plus, un tel dispositif est conçu pour convoyer les produits et n'est pas adapté à la manipulation ou au regroupement de produits qui sont déplacés d'un poste à un autre en reposant par leur fond sur un convoyeur, en étant alignés les uns derrière les autres et en étant séparés les uns des autres d'une distance que l'on peut faire varier, pour l'adapter au pas minimum nécessaire entre deux produits (le pas entre deux produits variant en fonction de la taille et de la forme des produits convoyés).

Le document JP 11-245 186 divulgue un outil de manipulation et de regroupement de produits selon le préamble de la revendication 1.

L'invention selon la revendication 1 permet de pallier les inconvénients des dispositifs de l'état de la technique.

Elle concerne un outil qui est conçu pour être mis en oeuvre dans une installation de convoyage où les produits sont déplacés d'un poste à un autre sur un convoyeur en étant alignés les uns derrière les autres et en étant séparés les uns des autres d'une distance prédéterminée. Par ailleurs et notamment, l'outil conforme à l'invention s'adapte plus facilement aux changements de produits, ou au changement de la distance séparant deux produits adjacents sur le convoyeur, ou même encore à la quantité de produits qui doit être saisie par l'outil, si un industriel souhaite changer le nombre de produits saisis par l'outil pour créer un lot. Par exemple, l'outil conforme à l'invention peut être conçu pour s'adapter à la manipulation d'une quantité de produits alignés et convoyés comprenant entre 2 et 16 produits.

L'invention concerne à cet effet un outil de manipulation et de regroupement de produits qui sont alignés les uns derrière les autres et qui sont séparés d'un pas donné, l'outil comprenant une rangée de supports aptes à porter chacun un élément de préhension pour un produit, les supports étant montés mobiles en déplacement sur au moins un rail, chaque support étant relié à un support adjacent par des moyens d'attache. Les moyens d'attache comprennent chacun une tige reliant deux supports adjacents ainsi qu'un organe de verrouillage de la position de l'un au moins des deux supports adjacents sur la tige, l'organe de verrouillage étant désactionnable pour adapter la distance entre deux supports audit pas entre deux produits.

Selon l'invention, l'outil est remarquable en ce qu'il comporte une pluralité de vérins, chaque vérin comportant un corps fixé sur un support et une tige, la tige du vérin étant la tige desdits moyens d'attache.

Une telle réalisation permet de fixer différentes longueurs (différents pas) entre les supports d'élément de préhension, en particulier en fixant l'organe de verrouillage sur la tige dudit au moins un vérin.

Ceci permet, d'une part, d'adapter facilement l'outil à la manipulation de produits plus ou moins espacés les uns des autres sur le convoyeur. Cela a pour conséquence de ne pas avoir à changer l'outil de manipulation ou à démonter certaines parties de l'outil pour l'adapter à la manipulation de produits différents. L'outil est conçu pour s'adapter à un changement de produits à manipuler.

D'autre part, le vérin sert de dispositif d'actionnement, assurant le déplacement de la tige par rapport au rail, ce qui assure un déplacement (parallèlement du rail) des têtes de préhension qui sont fixées sur la tige du vérin. Des groupes de têtes de préhension, et par conséquent des groupes de produits peuvent ainsi être créés.

L'outil conforme à l'invention peut également comporter les caractéristiques suivantes, prises séparément ou en combinaison :
- l'un au moins des supports d'éléments de préhension peut être relié à un châssis que comporte l'outil ;
- ledit au moins un support peut être monté mobile par rapport audit châssis, et l'outil peut comporter des moyens de blocage en position dudit au moins un support relié au châssis. Ceci a pour fonction d'assurer le centrage d"un nombre de lots qui est impair dans l'axe de l'outil ;
- les moyens de blocage peuvent comporter un bloqueur pneumatique ;
- les supports peuvent être montés mobiles transversalement au rail, entre une position active et une position escamotée, et l'outil comporte des moyens de blocage des supports en position escamotée. Ceci permet de choisir le nombre de supports nécessaires pour l'application que l'on souhaite faire de l'outil : ainsi, l'outil n'impose pas un nombre déterminé de supports pour la manipulation des produits ou pour leur regroupement ; et
- l'outil peut comporter des moyens de regroupement d'au moins deux supports pour former au moins deux groupes de supports.

L'invention concerne également un procédé de réglage d'un outil tel que défini précédemment.

Conformément à l'invention, le procédé peut comprendre les particularités suivantes :
- il comporte les étapes suivantes :
   a) resserrage des supports les uns contre les autres de part et d'autre de l'axe de l'outil ;
   b) déplacement d'au moins un doigt de positionnement le long d'un rail faisant face audit outil,
   c) positionnement dudit doigt en regard d'un premier support
   d) déplacement sensiblement vertical de l'outil ou du doigt, de sorte que ledit doigt soit en prise avec ledit support,
   e) déplacement sensiblement horizontal dudit doigt en prise avec ledit support sur une distance prédéterminée le long du rail, ladite distance correspondant audit pas entre deux produits.
   f) mise en place dudit organe de verrouillage sur la tige reliant un support à un autre support adjacent,
   g) déplacement vertical de l'outil ou du doigt pour dégager ledit doigt dudit support,
   lesdites étapes a) à f) étant réalisées pour chaque support ;
- ladite étape c) peut être réalisée pour la première fois sur un support situé à une extrémité de la rangée de supports ;
- le procédé peut mettre en oeuvre deux doigts de positionnement, les deux doigts se déplaçant sur ledit rail symétriquement par rapport à un axe dudit outil ;
- le procédé peut consister à utiliser un gabarit comprenant autant de doigts de positionnement que ledit outil comporte de supports d'éléments de préhension, et en ce que ledit réglage est réalisé par lesdites étapes suivantes :
   i) disposition du gabarit sous ledit outil,
   ii) mise en prise de chaque support respectivement avec un doigt de positionnement correspondant du gabarit,
   iii) mise en place des organes de verrouillage sur chacune des tiges reliant deux supports, et
   iv) dégagement du gabarit.

Enfin, l'invention vise une installation comprenant un outil de manipulation et de regroupement tel que défini précédemment, ainsi que, éventuellement, un dispositif de réglage comportant un rail sur lequel au moins un doigt de positionnement est monté mobile, et des moyens de commande du déplacement du doigt sur ledit rail.

Par ailleurs, le dispositif peut comporter deux doigts de positionnement, l'un au moins des deux doigts étant monté escamotable.

Pour pouvoir être exécutée, l'invention est exposée de façon suffisamment claire et complète dans la description suivante qui est, en plus, accompagnée de dessins dans lesquels :
- La figure 1 illustre schématiquement, en vue de face, un outil conforme à un premier mode de réalisation selon l'invention, avant fixation des organes de verrouillage ;
- La figure 2 montre, en vue de profil et en perspective, deux supports de l'outil montré en figure 1, portant les moyens d'attache conformes à l'invention ;
- La figure 3 illustre l'outil de la figure 1 au moment d'une première étape du procédé de réglage conforme à l'invention, ainsi qu'un dispositif de réglage conforme à l'invention ;
- La figure 4 illustre l'outil de la figure 1 au moment d'une seconde étape du procédé de réglage conforme à l'invention ;
- La figure 5 illustre l'outil de la figure 1, après avoir réglé toutes les distances entre les supports de l'outil ;
- La figure 6 montre l'outil conforme à l'invention, avec un positionnement des moyens d'attache qui est différent de celui illustré sur les figures précédentes ;
- La figure 7 illustre l'outil équipé des moyens d'attache montrés en figure 6, après avoir réglé toutes les distances entre les supports de l'outil ;
- La figure 8 montre l'outil des figures 6 et 7, après réglage de l'outil et après regroupement des supports, illustrant le fait que le choix et le positionnement des moyens d'attache permettent à la fois de fixer un pas entre les supports et de créer des groupes de produits ;
- Les figures 9a et 9b montrent encore une variante de positionnement des moyens d'attachent sur les supports de l'outil conforme à l'invention, permettant de réaliser des groupes de produits différents de ceux montrés en figure 8 ;
- Et la figure 10 montre encore une variante de mise en oeuvre de l'invention, en vue de côté et schématiquement faisant intervenir un gabarit.

Dans la description qui suit, les termes « inférieur », « supérieur », « haut », « bas » etc. sont utilisés en référence aux dessins pour une plus grande facilité de compréhension.

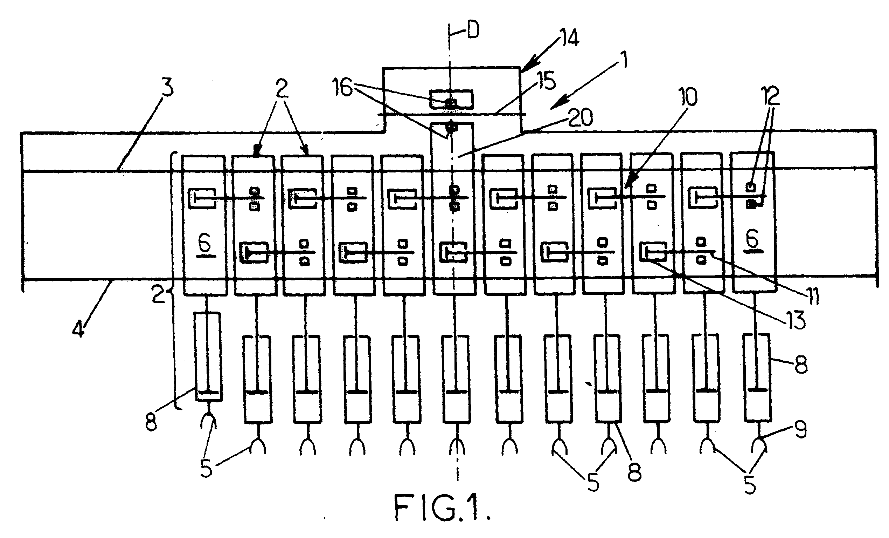

La figure 1 montre un outil 1 de manipulation conforme à l'invention. L'outil 1 permet de manipuler et de regrouper des produits qui arrivent en dessous, en étant alignés les uns derrières les autres et équidistants les uns des autres. La distance séparant deux produits adjacents est dénommée ci-après le « pas ».

Les produits n'ont pas été représentés sur les figures pour en simplifier la lecture. L'homme du métier saura toutefois les disposés sous l'outil, comme il est en soit courant et à la façon décrite, par exemple dans les documents cités ci avant, FR 2 918 359 et FR 2 876 615.

L'outil 1 comprend une rangée de supports 2, qui sont montés mobiles en déplacement sur deux rails 3 et 4. Les rails 3 et 4 sont parallèles.

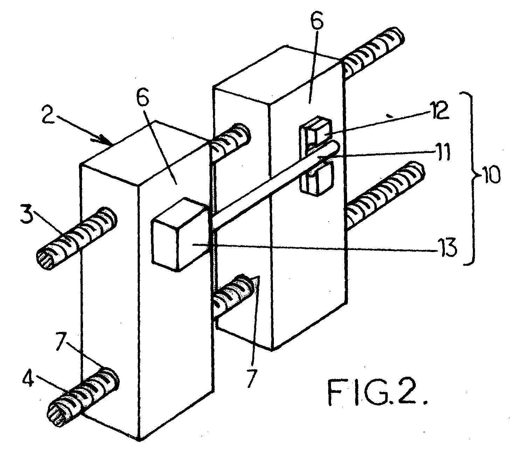

Pour permettre la mobilité des supports 2 sur les rails 3 et 4, les supports 2 comprennent un corps 6 sensiblement parallélépipédiques, présentant deux ouvertures 7 traversantes, les ouvertures 7 traversantes étant espacées de telle façon que les corps 6 peuvent s'enfiler sur les rails 3 et 4, comme le montre en particulier la figure 2.

Par ailleurs, chaque support 2 est apte à porter un élément 5 de préhension pour un produit.

Pour ce faire; les corps 6 parallélépipédiques sont reliés à des vérins 8, les vérins 8 se trouvant dans le prolongement de chacun des corps 6 des supports 2.

A l'extrémité de chaque vérin 8, se trouve un moyen 9 d'accrochage d'un élément 5, l'élément 5 étant apte à saisir un produit. Il s'agit par exemple d'une pince, d'une ventouse...

Les moyens 9 d'accrochage n'ont pas été représentés en détail, et peuvent être réalisés par tous moyens connus de l'homme du métier.

Il devra être compris que les supports 2 pourraient être reliés aux éléments 5 permettant de saisir des produits par tout autre moyen que les vérins 8. Les vérins 8 ont été choisis ici pour permettre l'escamotage d'un élément 5 de préhension, lorsque, par exemple, le nombre d'éléments de préhension nécessaire à la formation d'un ou plusieurs lots (selon le choix de l'utilisateur) ne correspond pas au nombre d'élément 5 de préhension que comporte l'outil. D'autres moyens, permettant cet escamotage, pourraient donc être mis en oeuvre sans sortir du cadre de l'invention.

Conformément à l'invention, chaque support 2 est relié à un support 2 adjacent par des moyens 10 d'attache.

Comme on peut le voir sur la figure 1, les moyens 10 d'attache comprennent chacun une tige 11, qui relie deux supports adjacents, ainsi qu'un organe 12 de verrouillage, permettant de verrouiller la position de l'un au moins des deux supports 2 adjacents sur la tige 11. L'organe 12 de verrouillage est désactionnable, c'est-à-dire qu'il peut être désolidarisé (désactivé) de la tige 11 après fixation.

L'organe 12 de verrouillage permet ainsi d'adapter la distance entre deux supports à une distance prédéterminée et donc, si on le souhaite, au pas prédéterminé entre deux produits. L'organe 12 de verrouillage autorise également, grâce à son caractère désactionnable, un changement de distance entre deux supports.

Sur la figure 1, notamment, on a représenté l'organe 12 de verrouillage par deux petits carrés, qui représentent schématiquement chacun une mâchoire. Pour fixer l'organe 12 de verrouillage sur la tige 11, les mâchoires sont resserrées autour de la tige 11 et maintenues en position par des moyens de blocage, par exemple, d'un pion (voir référence 19 ci-après).

Concrètement, l'organe 12 de verrouillage utilisé peut être un bloqueur pneumatique.

Dans le cadre de ce mode de réalisation, la tige 11 est une tige de vérin 13 dont le corps est fixé sur un support 2, adjacent de préférence au support 2 sur lequel est fixé l'organe 12 de verrouillage.

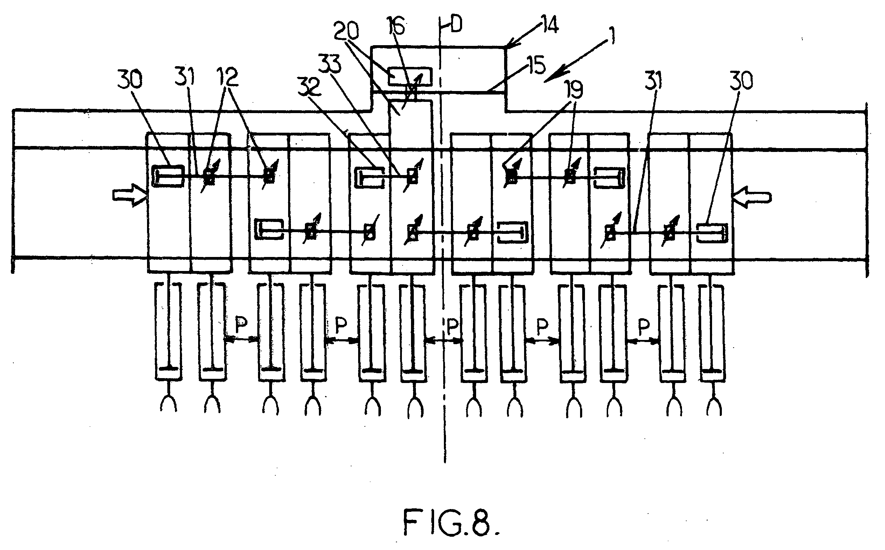

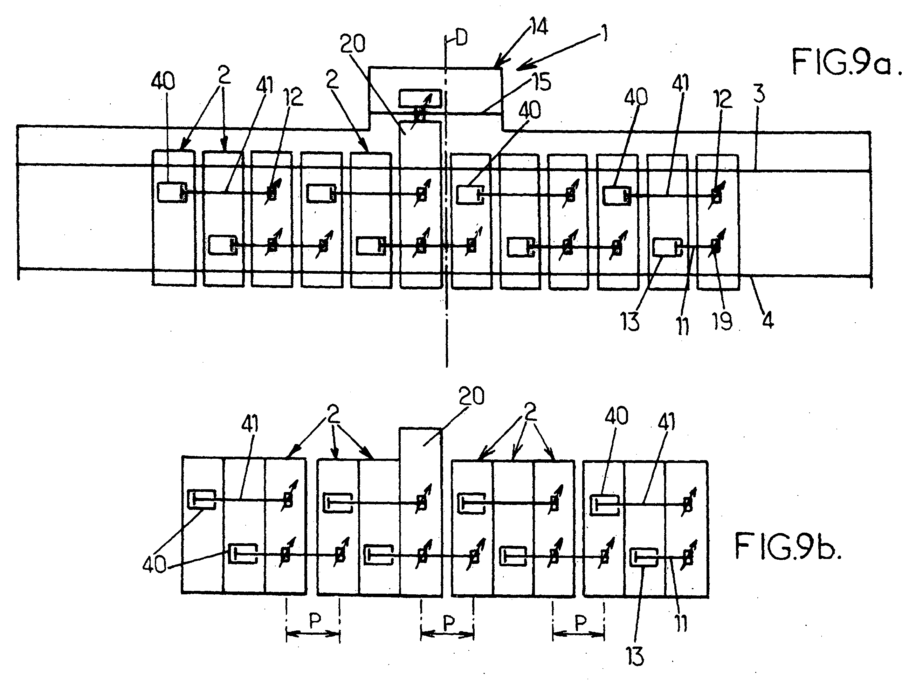

L'utilisation d'un vérin a pour objectif de pouvoir regrouper des supports, de manière à créer des groupes de produits, comme il sera vu par la suite, en faisant référence aux figures 8 et 9.

La surface plane des corps 6 parallélépipédiques des supports 2 permet une fixation aisée et traditionnelle, par exemple par vissage, du vérin 13 et de l'organe 12 de verrouillage.

Par ailleurs, on prévoit que l'un des supports 2 soit relié à un châssis 14 que comporte l'outil 1.

Plus particulièrement, un support 20 est monté mobile sur un troisième rail 15 fixé au châssis 14. La position du support 20 sur le rail 15 peut être verrouillée grâce à des moyens 16 de blocage qui peuvent, par exemple, être réalisés également par un bloqueur pneumatique (comme l'organe 12).

Les rails 3 et 4 sont également fixés par leurs extrémités sur le châssis 14. Les rails 3, 4 et 15 sont parallèles entre eux.

Le déplacement du support 20 sur un troisième rail 15 permet de déplacer l'ensemble des supports 2 liés les uns aux autres par rapport à l'axe D de l'outil 1. Cela permet, par exemple, de répartir symétriquement de part et d'autre de l'axe D de l'outil les supports ou des groupes de supports, comme on pourra le voir par la suite.

Comme il a été vu précédemment, les supports 2 comportent des vérins 8 à l'extrémité desquels sont montés les dispositifs 9 d'accrochage d'éléments 5 de préhension.

Les vérins 8 ont pour fonction d'abaisser ou de remonter les éléments 5 de préhension des produits. Ainsi réalisés, les supports 2 sont mobiles transversalement aux rails 3 et 4, entre une position où ils permettent aux éléments 5 de préhension de saisir un produit, ou une position escamotée, dans laquelle les éléments 5 de préhension ne peuvent pas saisir de produit.

L'outil 1 comporte des moyens de blocage des supports en position verticale escamotée. Il s'agit, par exemple, de moyens de commande des vérins connus de l'homme du métier ou bien encore de bloqueurs pneumatiques.

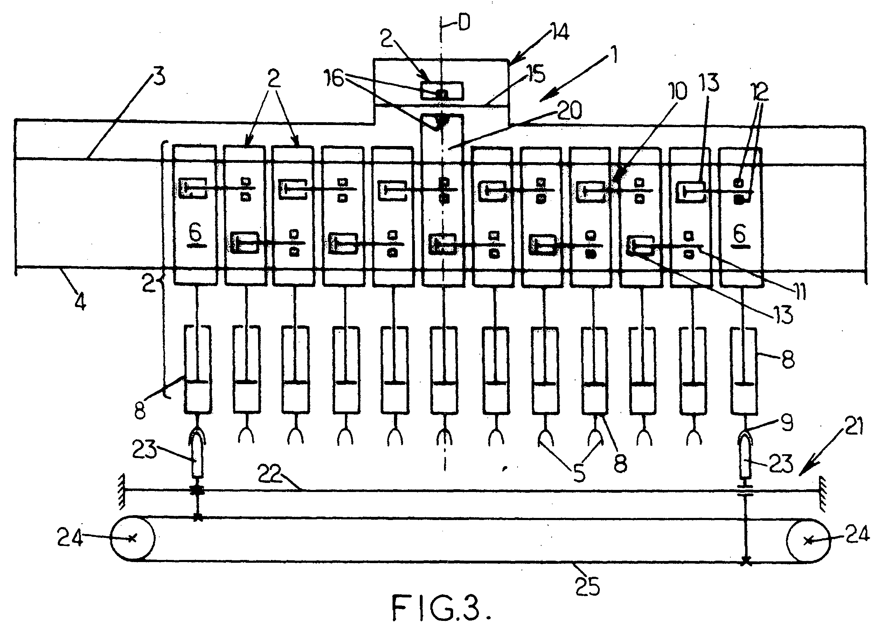

Il va maintenant être fait référence aux figures 3 à 5 pour décrire un procédé de réglage de l'outil 1 représenté sur la figure 1, ainsi qu'un dispositif de réglage, permettant de mettre en oeuvre le procédé de réglage.

Comme on peut le voir sur les figures 3 à 5, un dispositif 21 de réglage comprend un rail 22, sur lequel est monté au moins un doigt 23 de positionnement. En l'occurrence, dans le cadre de ce mode de réalisation, le dispositif 21 comprend deux doigts 23 de positionnement qui sont montés mobiles sur le rail 22.

Le déplacement des doigts 23 se fait symétriquement par rapport à l'axe D de l'outil 1. Pour ce faire, les deux doigts 23 sont reliés à une bande 25 sans fin, montée mobile autour de deux axes 24.

La bande 25 sans fin présente ainsi deux brins parallèles qui se déplacent en sens opposés lorsque la bande est mobile.

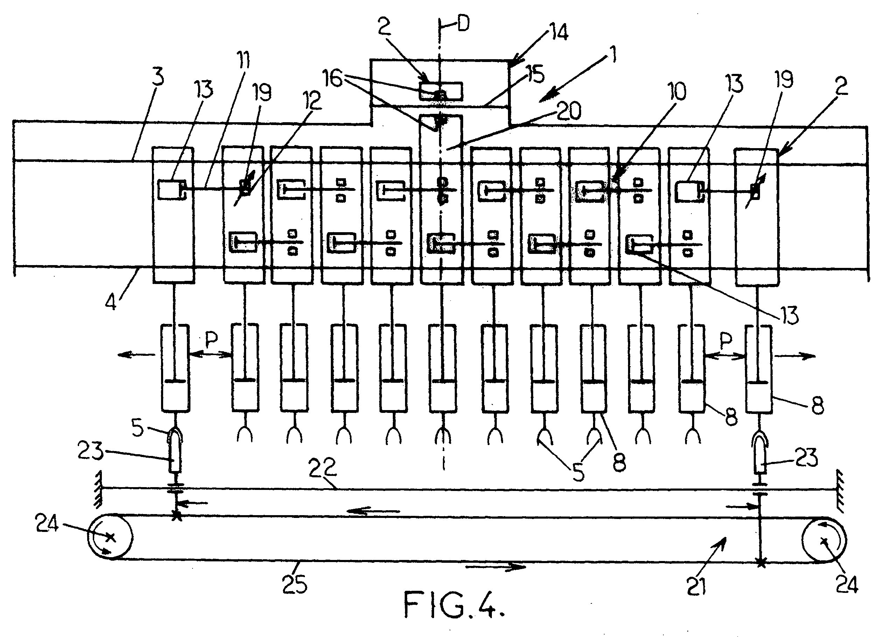

Chaque doigt est fixé sur un brin de sorte que, quand la bande 25 est entraînée en déplacement, les deux doigts se rapprochent ou s'écartent l'un de l'autre simultanément (voir figure 4).

La bande 25 sans fin montée sur deux axes 24 constitue ainsi des moyens de commande du déplacement des doigts 23 sur le rail 22.

Pour régler et fixer l'écartement entre chacun des supports 2 de l'outil 1, il est procédé de la façon suivante.

Tout d'abord, tous les supports 2 sont resserrés les uns contre les autres vers l'axe D de l'outil 1.

Puis, les deux doigts 23 de positionnement sont déplacés le long du rail 22, qui fait face à l'outil 1, de sorte à les positionner en regard chacun d'un support 2 et, en particulier, d'un élément 5 de préhension que porte le support 2.

Dans le cadre de ce mode de réalisation, les doigts 23 de positionnement viennent se placer au droit des supports 2 qui sont situés aux extrémités de la rangée de support 2 que porte l'outil.

Une fois que les doigts 23 sont positionnés ainsi, l'outil est déplacé verticalement, de sorte que les doigts 23 viennent en prise avec les éléments 5 de préhension des supports 2, donc viennent en prise avec les supports 2 (voir figure 3).

On notera en particulier que les éléments 5 de préhension présentent des formes complémentaires à celles des extrémités des doigts 23 de positionnement.

L'étape suivante consiste à déplacer les doigts 23, en prise avec les supports 2, sur une distance prédéterminée le long du rail 22.

La distance prédéterminée peut correspondre au pas entre les produits à saisir.

Les doigts 23 étant en prise avec les éléments 5 de préhension des supports 2, les supports 2 sont déplacés le long des rails 3 et 4, et de façon symétrique par rapport à l'axe D de l'outil.

Lorsque les supports 2 ont été déplacés d'une distance correspondant au pas P, les organes 12 de verrouillage sont actionnés sur chacune des tiges 11 (resserrement des mâchoires de l'organe 12 de verrouillage), ou bien on peut également positionner un pion 19 pour maintenir en position verrouillée les mâchoires de l'organe 12 de verrouillage. Le pion 19 est amovible.

L'outil 1 est alors remonté, pour dégager les doigts 23 des éléments 5 de préhension.

Chacune de étapes précédemment décrite est alors répétée pour les supports 2 adjacents, autant de fois que nécessaire.

Comme il a été expliqué précédemment, un support 20 est monté mobile sur le rail 15. Sa position sur le rail 15 est fixée par actionnement des moyens 16 de blocage de telle manière que les supports 2 de l'outil 1 soient répartis de façon symétrique par rapport à l'axe D de l'outil 1. En effet, suivant que l'outil comporte un nombre pair ou un nombre impair de supports 2, les supports ne seront pas répartis de la même façon par rapport à l'axe D de l'outil 1. C'est en bougeant le support 20 sur le rail 15 et en actionnant les moyens 16 de blocage qu'est assurée une répartition symétrique de supports 2 de part et d'autre de l'axe D de symétrie.

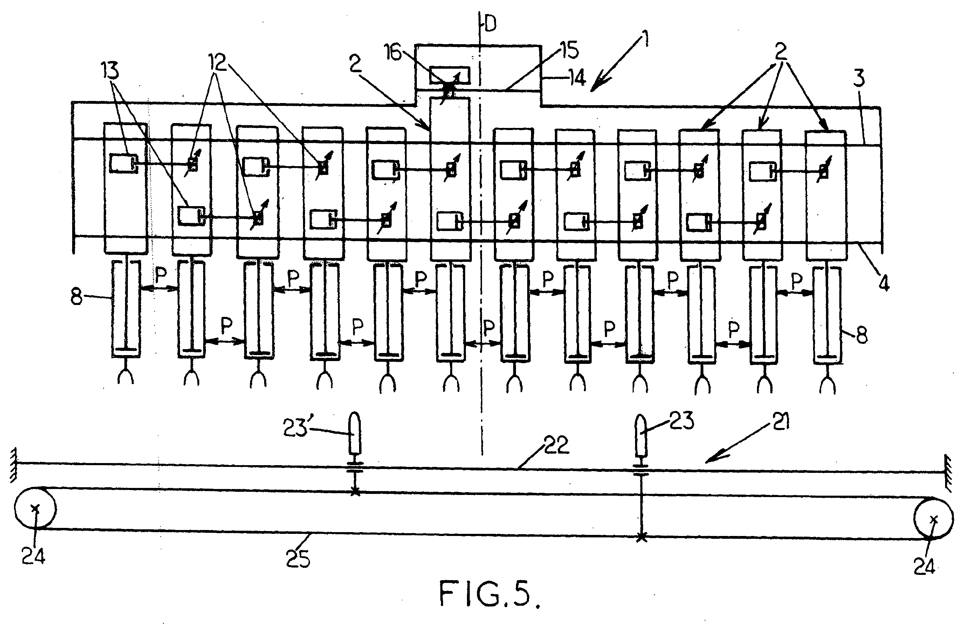

Pour déplacer le support 20 sur le rail 15, l'un des doigts 23 est utilisé. L'autre doigt 23 ne doit pas entrer en contact avec l'un quelconque des éléments 5 de préhension. Aussi, pour ce faire, on peut prévoir que l'un des éléments 23 soit monté amovible, ou bien qu'il soit monté mobil en déplacement vertical (ou escamotable), comme le doigt portant la référence 23' sur la figure 5. De cette façon, l'élément 23' peut entrer en prise avec un élément 5 de préhension, alors que l'élément 23 ne le peut pas (car il se trouve en retrait par rapport à l'élément 23').

On note, sur la figure 5, que chacun des supports 2 est séparé d'un support 2 adjacent d'une distance prédéterminée correspondant au pas P entre les produits à saisir.

On note également que chacun des organes 12 de verrouillage est bloqué en position sur chacune des tiges 11 des vérins 13, et que la position du support 20 est verrouillée sur le rail 15 grâce à l'actionnement des moyens 16 de blocage.

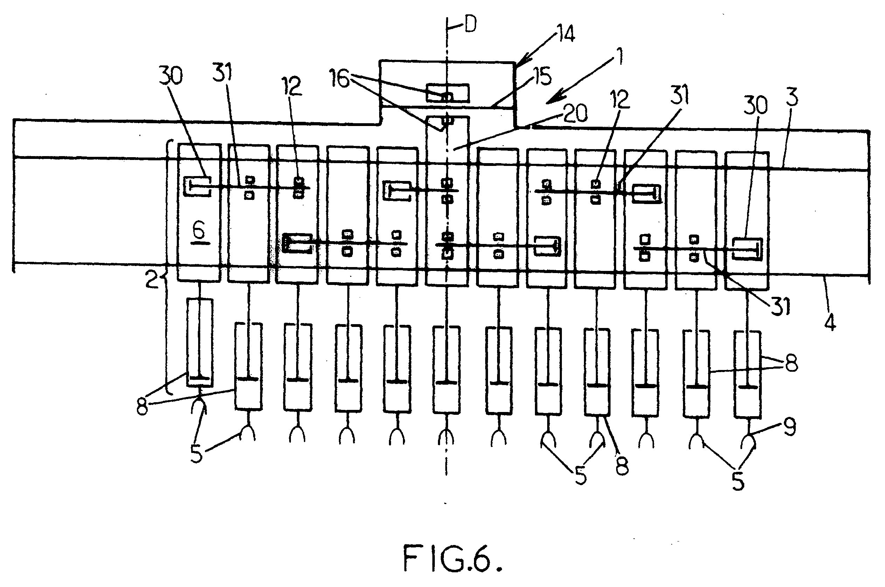

Il va maintenant être fait référence aux figures 6 à 8 pour décrire un autre agencement des moyens d'attache entre les supports 2.

Cet autre agencement permet de créer des groupes de supports 2, pour créer, par exemple, des lots de produits.

Les figures 6 à 8 montrent l'agencement de moyens 10 d'attache qui permet la création de six groupes de deux produits.

Les mêmes références ont été gardées entre les figures 1 à 8 pour désigner les mêmes objets.

On note que l'outil 1 de manipulation représenté sur la figure 6 est strictement identique à l'outil 1 décrit et illustré sur les figures précédentes, excepté que les moyens 10 d'attache sont réalisés de façon légèrement différente.

Les moyens 10 d'attache dans le cadre de ce mode réalisation comprennent des vérins 30 comprenant des tiges 31 dont la longueur est supérieure à la longueur des tiges 11 des vérins 13 décrits dans l'exemple précédent.

La course des vérins 30 est identique à celle des vérins 13.

La longueur des tiges 31 est telle qu'on peut fixer dessus deux supports 2 grâce aux organes 12 de verrouillage (voir figure 6).

Les supports 2 de l'outil 1, représenté à la figure 6, sont espacés les uns de autres d'un pas prédéterminé grâce au dispositif 21 de réglage, qui a été décrit précédemment, et grâce à la mise en oeuvre du procédé tel que décrit précédemment.

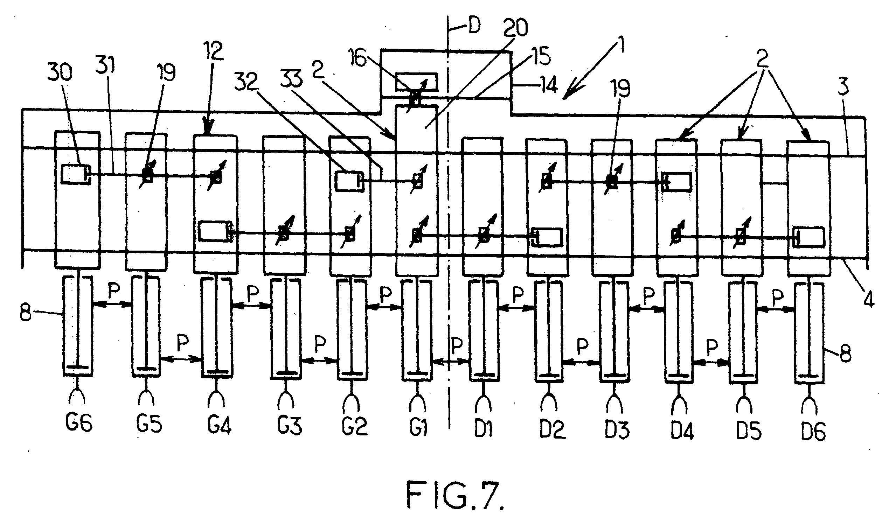

La figure 7 illustre l'outil 1 obtenu à l'issue du procédé de réglage.

On remarque que les supports 2 sont disposés exactement de la même façon sur les rails 3 et 4, avec le même écart P entre chacun des supports 2, par rapport au dispositif illustré sur la figure 5 qui comprend des moyens d'attache sensiblement différents.

Dans le cadre de ce mode réalisation particulier, les moyens 10 d'attache lient ensemble trois supports 2. En effet, le corps d'un vérin 30 se trouve fixé à un premier corps 6 de support 2 et les deux supports 2 adjacents sont eux fixés sur la tige 31 du vérin 30.

Le support 2 qui est fixé à l'extrémité de la tige 31 du vérin 30, porte également le corps d'un second vérin 30, le reliant à deux autres supports adjacents.

Il en est de même pour chacune des séries de trois supports 2 de l'ensemble des supports 2 de l'outil 1, excepté pour le support 20 fixé au rail 15 sur le châssis 14 de l'outil 1.

En effet, le support 20 est, lui, fixé aux extrémités de deux tiges 31 et 33 de deux vérins 30 et 32. Le vérin 32 comprend une tige 33 qui est plus courte que la tige 31 des vérins 30.

L'espace P entre deux supports est fixé par le positionnement des moyens de blocage sur les tiges des vérins, chaque support 2 (excepté les supports 2 d'extrémité de la rangée de supports) étant fixé à au moins une tige 31 d'un vérin 30.

Toutefois, les supports 2 qui portent les corps des vérins 30, 32 ont la possibilité de se rapprocher d'un support 2 adjacent, quand la tige 31, 33 du vérin 30, 32 qu'il porte rentre dans le corps du vérin 30, 32.

Le regroupement des produits, obtenu par le regroupement des supports 2 ainsi fixés les uns aux autres, est obtenu en poussant tous les supports 2 vers l'axe D de symétrie de l'outil 1, comme il est symbolisé par les flèches horizontales sur la figure 8.

Les deux supports 2 adjacents, qui sont fixés sur une tige 31 d'un même vérin 30, restent écartés l'un de l'autre du pas P prédéterminé puisqu'ils ne sont pas autorisés à bouger sur la tige 31 du vérin 30 (à cause de l'organe 12 de verrouillage).

Toutefois, les deux supports 2 qui sont adjacents, et dont l'un est fixé sur la tige 31 d'un premier vérin 30 et supporte la tête d'un second vérin 30, se rapprochent l'un de l'autre par l'introduction de la tige 31 dans le vérin 30.

Il se crée ainsi des groupes de deux supports 2, séparés du pas P prédéterminé, correspondant au pas entre les produits.

La tige 33 du vérin 32 est également insérée dans le vérin 32 lorsque le support 2 adjacent au support 20 et relié à celui-ci, se rapproche de l'axe D de l'outil.

Les groupes de deux supports 2 sont illustrés sur la figure 8.

La figure 9 illustre encore un autre mode de fixation des moyens 10 d'attache sur les supports 2. Les moyens 10 d'attache comprennent des vérins 40 avec des tiges 41 encore plus longues que les tiges 31, et sur lesquelles peuvent se fixer un ou deux supports 2.

On notera que certains éléments des supports 2 (comme les vérins 8, par exemple) n'ont pas été représentés sur la figure 9, de façon à en simplifier la lecture - la figure 9a pour objet d'attirer l'attention du lecteur sur les moyens 10 d'attache et les supports 2 se déplaçant sur les rails 3 et 4, ainsi que sur les groupes de trois supports 2 obtenus.

Les supports 2 sont reliés par groupes de trois aux vérins 40. La première série de trois supports fixés sur le vérin 40, à une extrémité de la rangé de supports 2, est fixée de la façon suivante : Le premier support 2 porte le corps du vérin 40. Le dernier support 2 (du groupe de trois supports adjacents) est fixé à l'extrémité de la tige 41 du vérin 40. Le support 2 intermédiaire n'est fixé ni à la tige 41 ni au corps 40 du vérin.

Toutefois, le second support 2 porte la tête d'un second vérin 40, comprenant une tige 41 sur laquelle est fixé le support 2 à proximité immédiate et le support 2 adjacent suivant.

Il est ainsi réalisé un premier groupe de quatre supports 2 dont les trois premiers supports sont autorisés à se déplacer vers l'axe D de l'outil 1 et à se rapprocher les uns des autres. Toutefois, les deux supports 2 fixés sur la tige 41 du deuxième vérin 40 ne sont pas autorisés à se rapprocher l'un de l'autre.

L'espace entre ces deux supports 2 va définir un espace de séparation P des lots de trois supports 2 que l'on peut obtenir grâce à cet agencement des moyens 10 d'attache (voir figure 9b).

Pour réaliser des groupes de trois supports 2 on prévoit également que les deux derniers supports de la rangée (voir les deux derniers supports de droite sur la figure 9b) soient reliés par un vérin 13, tel qu'illustré sur les figures 1 à 5, dont la tige 11 est beaucoup plus courte que celle des vérins 40. Ce dernier vérin 13 a pour seul objectif de relier l'avant dernier support 2 de droite au dernier support 2 de droite.

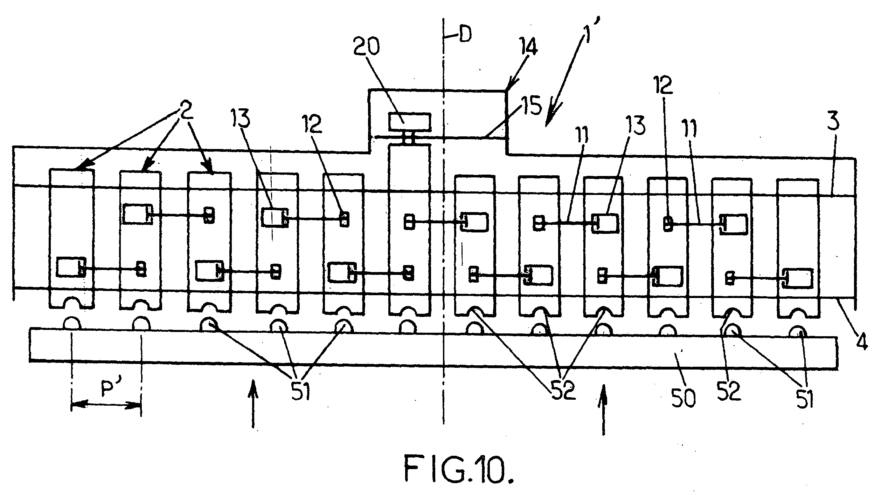

Il va maintenant être fait référence à la figure 10, pour décrire un autre moyen pour régler un pas entre deux supports 2 adjacents.

La figure 10 illustre ainsi un autre dispositif de réglage. Il s'agit d'un gabarit 50 portant des doigts 51 espacés les uns des autres d'une distance p' correspondant au pas de séparation des produits à saisir.

Le procédé de réglage mettant en oeuvre ce gabarit 50 consiste à disposer le gabarit sous l'outil 1', puis à mettre en prise chaque support 2 avec un doigt 51 de positionnement.

Un fois les supports 2 placés correctement en prise avec les doigts 51 de positionnement du gabarit 50, les organes 12 de verrouillage sont actionnés sur chacune des tiges reliant deux supports 2 adjacents.

Le gabarit est alors dégagé.

L'outil 1' montré sur la figure 10 a été représenté de façon légèrement différente de celle représentée sur les figures précédentes.

L'outil 1' comporte des supports 2, mobiles en déplacement sur les rails 3 et 4. L'espacement entre les supports 2 est réglé grâce à la présence, sur chacun des supports, d'une pièce 52 présentant une forme complémentaire à celle des doigts 51 du gabarit 50. Cet exemple de réalisation montre qu'il n'est pas nécessaire de disposer des éléments 5 de préhension pour régler la distance entre les supports de ces éléments 5.

Pour mettre insérer les doigts 51 du gabarit 50 dans les pièces 52 de forme complémentaire, il peut être prévu de déplacer le gabarit 50 par rapport à l'outil 1' sans toutefois sortir d'un procédé conforme à l'invention.

On comprend de la description qui précède comment l'outil de manipulation 1 ou 1' peut être réglé pour à la fois séparer les supports 2 les uns des autres d'une distance qui correspond au pas P ou p' des produit à saisir, et de quelle façon, grâce aux moyens 10 d'attache, on peut changer aisément les espaces entre les supports 2 sans avoir à changer lesdits supports 2 de l'outil 1 ou 1', ou bien encore créer des groupes de produits.

L'invention est définie par les revendications et n'est pas limitée aux exemples spécifiquement décrits sur les figures.

## Revendications

1. Outil (1, 1') de manipulation et de regroupement de produits qui sont alignés les uns derrière les autres et qui sont séparés d'un pas (P, p') donné, ledit outil (1, 1') comprenant :
- une rangée d'au moins trois supports (2) aptes à porter chacun un élément (5) de préhension pour un produit, les supports (2) étant montés mobiles en déplacement sur au moins un rail (3, 4), chaque support (2) étant relié à chaque support (2) adjacent par des moyens (10) d'attache,
- les moyens (10) d'attache comprenant chacun une tige (11, 31, 33, 41) reliant deux supports (2), ainsi qu'un organe (12 ; 19) de verrouillage de la position de l'un au moins des deux supports (2) sur la tige (11, 31, 33, 41),
- l'organe (12 ; 19) de verrouillage étant désactionnable pour adapter la distance entre deux supports (2) audit pas (P, p') entre deux produits,
**caractérisé en ce que** l'outil comporte une pluralité de vérins (13, 30, 32, 40), chaque vérin (13, 30, 32, 40) comportant un corps et une tige (11, 31, 33, 41), la tige (11, 31, 33, 41) du vérin étant la tige des moyens (10) d'attache, chaque support (2 ; 20) étant fixé au corps d'un vérin (13, 30, 32, 40) et/ou à un organe de verrouillage (12 ; 19) de la tige d'un vérin (13, 30, 32, 40) dont le corps est fixé sur un autre support (2 ; 20).

2. Outil (1) selon la revendication 1, **caractérisé en ce que** l'un (20) au moins des supports (2) d'éléments de préhension est relié à un châssis (14) que comporte l'outil.

3. Outil (1) selon la revendication 2, **caractérisé en ce que** ledit au moins un support (20) est monté mobile par rapport audit châssis (14), et **en ce que** l'outil (1) comporte des moyens (16) de blocage en position dudit au moins un support (20) relié au châssis (14).

4. Outil (1) selon la revendication 3, **caractérisé en ce que** lesdits moyens (16) de blocage comportent un bloqueur pneumatique.

5. Outil (1) selon l'une quelconque des revendications précédentes, **caractérisé en ce que** les supports (2) sont montés mobiles transversalement au rail, entre une position active et une position escamotée, et **en ce que** ledit outil (1) comporte des moyens de blocage des supports (2) en position escamotée.

6. Procédé de réglage d'un outil conforme à l'une quelconque des revendications précédentes, **caractérisé en ce qu'**il comporte les étapes suivantes :
a) resserrage des supports les uns contre les autres de part et d'autre de l'axe de l'outil ;
b) déplacement d'au moins un doigt (23) de positionnement le long d'un rail (22) faisant face audit outil (1),
c) positionnement dudit doigt (23) en regard d'un premier support (2, 20)
d) déplacement sensiblement vertical de l'outil (1) ou du doigt (23), de sorte que ledit doigt (23) soit en prise avec ledit support (2, 20),
e) déplacement sensiblement horizontal dudit doigt (23) en prise avec ledit support (2, 20) sur une distance (P) prédéterminée le long du rail (22), ladite distance (P) correspondant audit pas entre deux produits.
f) mise en place dudit organe (12, 19) de verrouillage sur la tige (11, 31, 33, 41) reliant un support (2, 20) à un autre support (2, 20) adjacent,
g) déplacement vertical de l'outil (1) ou du doigt (23) pour dégager ledit doigt (23) dudit support (2, 20),
et **en ce que** lesdites étapes a) à f) sont réalisées pour chaque support (2).

7. Procédé selon la revendication 6, **caractérisé en ce que** ladite étape c) est réalisée pour la première fois sur un support (2) situé à une extrémité de la rangée de supports (2, 20).

8. Procédé selon la revendication 7, **caractérisé en ce qu'**il met en oeuvre deux doigts (23) de positionnement, les deux doigts (23) se déplaçant sur ledit rail (22) symétriquement par rapport à un axe (D) dudit outil (1)..

9. Procédé de réglage d'un outil (1') conforme à l'une quelconque des revendications 1 à 5, **caractérisé en ce qu'**il consiste à utiliser un gabarit (50) comprenant autant de doigts (51) de positionnement que ledit outil (1') comporte de supports (2, 20) d'éléments de préhension, et **en ce que** ledit réglage est réalisé par lesdites étapes suivantes :
i) disposition du gabarit (50) sous ledit outil (1'),
ii) mise en prise de chaque support (2, 20) respectivement avec un doigt (51) de positionnement correspondant du gabarit (50),
iii) mise en place des organes (12, 19) de verrouillage sur chacune des tiges (11) reliant deux supports (2,20),
iv) dégagement du gabarit (50).

10. Installation comprenant un outil selon l'une quelconque des revendications 1 à 5.

11. Installation selon la revendication 10. comprenant en outre un dispositif (21) de réglage pour régler l'outil (1) selon l'une quelconque des revendications 1 à 5, le dispositif de réglage comportant un rail (22) sur lequel au moins un doigt (23) de positionnement est monté mobile, et des moyens (24) de commande du déplacement du doigt (23) sur ledit rail (22).

## Patentansprüche

1. Werkzeug (1, 1') zur Handhabung und Umgruppierung von Produkten, die hintereinander aufgereiht sind und durch eine gegebene Schrittweite (P, p') getrennt sind, wobei das Werkzeug (1, 1') Folgendes umfasst:
- eine Reihe von mindestens drei Trägern (2), die jeweils ein Greifelement (5) für ein Produkt tragen können, wobei die Träger (2) beweglich montiert sind, so dass sie auf wenigstens einer Schiene (3, 4) verlagerbar sind, wobei jeder Träger (2) mit jedem benachbarten Träger (2) durch Befestigungsmittel (10) verbunden ist,
- wobei die Befestigungsmittel (10) jeweils einen Stift (11, 31, 33, 41), der zwei Träger (2) verbindet, sowie ein Organ (12; 19) zur Verriegelung der Position wenigstens eines der zwei Träger (2) an dem Stift (11, 31, 33, 41) aufweisen,
- wobei das Verriegelungsorgan (12; 19) deaktivierbar ist, um den Abstand zwischen zwei Trägern (2) an die Schrittweite (P, p') zwischen zwei Produkten anzupassen,
**dadurch gekennzeichnet, dass** das Werkzeug mehrere Stellantriebe (13, 30, 32, 40) umfasst, wobei jeder Stellantrieb (13, 30, 32, 40) einen Körper und einen Stift (11, 31, 33, 41) aufweist, wobei der Stift (11, 31, 33, 41) des Stellantriebs der Stift der Befestigungsmittel (10) ist, wobei jeder Träger (2; 20) am Körper eines Stellantriebs (13, 30, 32, 40) und/oder an einem Verriegelungsorgan (12; 19) des Stifts eines Stellantriebs (13, 30, 32, 40), dessen Körper an einem anderen Träger (2; 20) befestigt ist, befestigt ist.

2. Werkzeug nach Anspruch 1, **dadurch gekennzeichnet, dass** wenigstens einer (20) der Träger (2) von Greifelementen mit einem Rahmen (14), den das Werkzeug aufweist, verbunden ist.

3. Werkzeug (1) nach Anspruch 2, **dadurch gekennzeichnet, dass** der wenigstens eine Träger (20) beweglich in Bezug auf den Rahmen (14) montiert ist und dass das Werkzeug (1) Mittel (16) zum Blockieren der Position des wenigstens einen mit dem Rahmen (14) verbundenen Trägers (20) umfasst.

4. Werkzeug (1) nach Anspruch 3, **dadurch gekennzeichnet, dass** die Blockiermittel (16) eine Druckluftblockiereinrichtung umfassen.

5. Werkzeug (1) nach einem der vorhergehenden Ansprüche, **dadurch gekennzeichnet, dass** die Träger (2) so montiert sind, dass sie quer zu der Schiene zwischen einer aktiven Position und einer eingezogenen Position beweglich sind und dass das Werkzeug (1) Mittel zum Blockieren der Träger (2) in der eingezogenen Position umfasst.

6. Verfahren zum Einstellen eines Werkzeugs nach einem der vorhergehenden Ansprüche, **dadurch gekennzeichnet, dass** es die folgenden Schritte umfasst:
a) Festklemmen von Trägern aneinander beiderseits der Werkzeugachse;
b) Verlagern wenigstens eines Positionierungszapfens (23) längs einer Schiene (22), die dem Werkzeug (1) zugewandt ist,
c) Positionieren des Zapfens (23) gegenüber einem ersten Träger (2, 20),
d) im Wesentlichen vertikales Verlagern des Werkzeugs (1) oder des Zapfens (23) in der Weise, dass der Zapfen (23) mit dem Träger (2, 20) in Eingriff gelangt,
e) im Wesentlichen horizontales Verlagern des Zapfens (23) in Eingriff mit dem Träger (2, 20) über eine vorgegebene Strecke (P) längs der Schiene (22), wobei die Strecke (P) der Schrittweite zwischen zwei Produkten entspricht,
f) Anordnen des Verriegelungsorgans (12, 19) an dem Stift (11, 31, 33, 41), der einen Träger (2, 20) mit einem anderen benachbarten Träger (2, 20) verbindet,
g) vertikales Verlagern des Werkzeugs (1) oder des Zapfens (23), um den Eingriff zwischen dem Zapfen (23) und dem Träger (2, 20) zu lösen,
und dass die Schritte a) bis f) für jeden Träger (2) ausgeführt werden.

7. Verfahren nach Anspruch 6, **dadurch gekennzeichnet, dass** der Schritt c) erstmals an einem Träger (2) ausgeführt wird, der sich an einem Ende der Reihe von Trägern (2, 20) befindet.

8. Verfahren nach Anspruch 7, **dadurch gekennzeichnet, dass** es zwei Positionierungszapfen (23) verwendet, wobei sich die zwei Zapfen (23) auf der Schiene (22) symmetrisch in Bezug auf eine Achse (D) des Werkzeugs (1) verlagern.

9. Verfahren zum Einstellen eines Werkzeugs (1') nach einem der Ansprüche 1 bis 5, **dadurch gekennzeichnet, dass** es darin besteht, eine Schablone (50) zu verwenden, die so viele Positionierungszapfen (51) aufweist, wie das Werkzeug (1') Träger (2, 20) von Greifelementen enthält, und dass das Einstellen durch die folgenden Schritte ausgeführt wird:
i) Anordnen der Schablone (50) unter dem Werkzeug (1'),
ii)Herstellen eines Eingriffs zwischen jedem Träger (2, 20) und einem entsprechenden Positionierungszapfen (51) der Schablone (50),
iii) Anordnen der Verriegelungsorgane (12, 19) an jedem der Stifte (11), die zwei Träger (2, 20) verbinden,
iv)Lösen des Eingriffs mit der Schablone (50).

10. Anlage, die ein Werkzeug nach einem der Ansprüche 1 bis 5 umfasst.

11. Anlage nach Anspruch 10, die außerdem eine Einstellvorrichtung (21) umfasst, um das Werkzeug (1) nach einem der Ansprüche 1 bis 5 einzustellen, wobei die Einstellvorrichtung eine Schiene (22), an der wenigstens ein Positionierungszapfen (23) beweglich montiert ist, und Mittel (24) zum Steuern der Verlagerung des Zapfens (23) an der Schiene (22) umfasst.

## Claims

1. Tool (1, 1') for handling and grouping together products which are aligned one behind the other and which are separated by a given pitch (P, p'), said tool (1, 1') comprising:
- a row of at least three supports (2) that are each able to bear a gripping element (5) for a product, the supports (2) being mounted so as to be able to move on at least one rail (3, 4), each support (2) being connected to each adjacent support (2) by attachment means (10),
- the attachment means (10) each comprising a stem (11, 31, 33, 41) connecting two supports (2) and a member (12; 19) for locking the position of at least one of the two supports (2) on the stem (11, 31, 33, 41),
- the locking member (12; 19) being able to be deactivated in order to adapt the distance between two supports (2) to said pitch (P, p') between two products, **characterized in that** the tool comprises a plurality of actuators (13, 30, 32, 40), each actuator (13, 30, 32, 40) comprising a body and a stem (11, 31, 33, 41), the stem (11, 31, 33, 41) of the actuator being the stem of the attachment means (10), each support (2; 20) being secured to the body of an actuator (13, 30, 32, 40) and/or to a member (12; 19) for locking the stem of an actuator (13, 30, 32, 40) whose body is secured to another support (2; 20).

2. Tool (1) according to Claim 1, **characterized in that** at least one (20) of the supports (2) of gripping elements is connected to a frame (14) comprised by the tool.

3. Tool (1) according to Claim 2, **characterized in that** said at least one support (20) is mounted so as to be able to move with respect to said frame (14), and **in that** the tool (1) comprises means (16) for immobilizing said at least one support (20) connected to the frame (14) in position.

4. Tool (1) according to Claim 3, **characterized in that** said immobilizing means (16) comprise a pneumatic immobilizer.

5. Tool (1) according to any one of the preceding claims, **characterized in that** the supports (2) are mounted so as to be able to move transversely with respect to the rail, between an active position and a retracted position, and **in that** said tool (1) comprises means for immobilizing the supports (2) in the retracted position.

6. Method for adjusting a tool in accordance with any one of the preceding claims, **characterized in that** it comprises the following steps:
a) clamping the supports against one another on either side of the axis of the tool;
b) moving at least one positioning finger (23) along a rail (22) facing said tool (1),
c) positioning said finger (23) facing a first support (2, 20),
d) moving the tool (1) or the finger (23) essentially vertically such that said finger (23) engages with said support (2, 20),
e) moving said finger (23), while engaged with said support (2, 20), essentially horizontally over a predetermined distance (P) along the rail (22), said distance (P) corresponding to said pitch between two products,
f) putting in place said locking member (12, 19) on the stem (11, 31, 33, 41) connecting a support (2, 20) to another adjacent support (2, 20),
g) moving the tool (1) or the finger (23) vertically to release said finger (23) from said support (2, 20),
and **in that** said steps a) to f) are carried out for each support (2).

7. Method according to Claim 6, **characterized in that** said step c) is carried out for the first time on a support (2) located at one end of the row of supports (2, 20).

8. Method according to Claim 7, **characterized in that** it employs two positioning fingers (23), the two fingers (23) moving on said rail (22) symmetrically with respect to an axis (D) of said tool (1).

9. Method for adjusting a tool (1') according to any one of Claims 1 to 5, **characterized in that** it consists in using a jig (50) comprising as many positioning fingers (51) as said tool (1') has supports (2, 20) for gripping elements, and **in that** said adjustment is carried out with the following steps:
i) positioning the jig (50) below said tool (1'),
ii) engaging each support (2, 20) respectively with a corresponding positioning finger (51) of the jig (50),
iii) putting in place the locking members (12, 19) on each one of the stems (11) connecting two supports (2, 20),
iv) removing the ig (50).

10. Installation comprising a tool according to any one of Claims 1 to 5.

11. Installation according to Claim 10, further comprising an adjusting device (21) for adjusting the tool (1) according to any one of Claims 1 to 5, the adjusting device comprising a rail (22) on which at least one positioning finger (23) is mounted so as to be able to move, and means (24) for controlling the movement of the finger (23) on said rail (22).
